**Europäisches Patentamt**

(19) **European Patent Office**

**Office européen des brevets**

(11) Numéro de publication: **0 108 011**
**B1**

(12) **FASCICULE DE BREVET EUROPEEN**

(45) Date de publication du fascicule du brevet:
**11.03.87**

(21) Numéro de dépôt: **83402042.2**

(22) Date de dépôt: **21.10.83**

(51) Int. Cl.⁴: **G 06 K 19/06**

(54) Objet portatif électronique pour le stockage d'informations.

(30) Priorité: **29.10.82 FR 8218250**

(43) Date de publication de la demande:
**09.05.84 Bulletin 84/19**

(45) Mention de la délivrance du brevet:
**11.03.87 Bulletin 87/11**

(84) Etats contractants désignés:
**DE GB**

(56) Documents cités:
**DE - A - 2 607 868**
**FR - A - 2 401 459**
**GB - A - 1 582 989**
**US - A - 4 001 550**
**US - A - 4 004 133**

(73) Titulaire: **THOMSON-CSF, 173, Boulevard Haussmann,**
**F-75379 Paris Cedex 08 (FR)**

(72) Inventeur: **Guichon, Didier, THOMSON-CSF**
**SCPI 173, bld Haussmann, F-75379 Paris Cedex 08 (FR)**

(74) Mandataire: **Lincot, Georges et al, THOMSON-CSF**
**SCPI 19, avenue de Messine, F-75008 Paris (FR)**

## Description

La présente invention concerne un objet portatif électronique pour le stockage d'informations.

De nombreux automates comportent des dispositifs de mémorisation pour stocker les informations nécessaires à leur fonctionnement. L'ensemble des informations ainsi stockées, sous forme de listes d'informations ou de données, constitue ce qui est appelé communément le programme et qui permet de faire exécuter par l'automate des suites d'opérations dans un ordre déterminé. L'intérêt de cette disposition est qu'elle permet de modifier le fonctionnement de l'automate, en modifiant seulement les informations contenues dans les dipositifs de mémorisation. Ceci se fait parfois manuellement à l'aide d'un clavier avec lequel l'opérateur rentre les informations de programme dans la mémoire de l'automate.

Un problème se pose cependant, lorsque le programme introduit manuellement contient une longue liste d'instructions et de données et que celles-ci doivent être rentrées dans l'automate dans des conditions d'exploitation naturelle difficiles et parfois même hostiles, car dans ces conditions l'opérateur est gêné dans ses manipulations et le nombre important d'informations à rentrer augmente d'autant les risques d'erreur de programmation et par voie de conséquence, de mauvais fonctionnement de l'automate. Un autre problème se pose également, lorsque les informations introduites manuellement sont des informations confidentielles, car dans ce cas, une personne non autorisée peut, en surveillant les manipulations de l'opérateur, lire à son profit les informations confidentielles qui sont introduites. Ceci est le cas, par exemple, de certains postes émetteur-récepteurs radio, portables ou portatifs fonctionnant à l'aide de listes de fréquences ou de clés de chiffrement transférées par un clavier dans une mémoire du poste.

Pour remédier à ces inconvénients, on connaît des systèmes qui offrent des solutions moins contraignantes et plus sûres au plan de la confidentialité qui visent à simplifier, voire à supprimer presque entièrement les interventions de l'opérateur pour rentrer les informations de programmation. Un exemple de réalisation de tels systèmes consiste à utiliser un dispositif auxiliaire formé par un objet portatif électronique comportant une mémoire dans laquelle sont stockées les informations, confidentielles ou non, à transférer et qui est branché sur l'appareil ou l'automate, sur le fonctionnement duquel on veut agir, pour changer les informations qui y sont contenues.

L'alimentation en énergie des circuits électroniques composant ces dispositifs auxiliaires est généralement résolue, soit, en munissant l'objet portatif de piles électriques soit, en prélevant directement l'énergie sur l'appareil ou l'automate sur lequel il est connecté.

Des réalisations correspondant aux objets portatifs du premier type sont par exemple décrites dans les brevets GB 1 582 989 ou US 4 001 550 et une autre correspondant à un objet portatif du deuxième type est décrite dans le brevet US 4 004 133.

Ces solutions présentent toutefois des inconvénients au plan de l'exploitation. En effet l'usage de piles augmente le poids des objets portatifs et le prélèvement de l'énergie d'alimentation sur l'appareil, ou l'automate, exige l'utilisation d'au moins une liaison bifilaire supplémentaire qui s'ajoute à la liaison nécessaire au transfert des informations et augmente les risques de coupure d'une de ces liaisons. Ces risques étant d'autant plus aggravés que l'appareil, et l'objet portatif sont situés à grande distance l'un de l'autre.

Le but de l'invention est de pallier les inconvénients précités.

A cet effet l'invention a pour objet un objet portatif électronique pour le stockage d'informations, comprenant des moyens de mémorisation pour mémoriser des données, des moyens d'accouplement pour connecter l'objet portatif à un dispositif de transfert de données extérieur, des circuits de commande interconnectés entre les moyens de mémorisation et les moyens d'accouplement, ainsi que des moyens de stockage d'énergie pour emmagasiner de l'énergie électrique fournie par le dispositif de transfert lorsque l'objet portatif est connecté au dispositif de transfert et pour alimenter en énergie électrique les moyens de mémorisation des circuits de commande de l'objet portatif, caractérisé en ce que l'objet portatif comprend en outre des moyens de commutation pour recharger les moyens de stockage d'énergie chaque fois que l'objet portatif est connecté au dispositif de transfert et après chaque transfert d'au moins une donnée entre les moyens de mémorisation de l'objet portatif et le dispositif de transfert, et en ce que l'objet portatif est relié au dispositif de transfert extérieur par une seule liaison bifilaire sur laquelle sont transmis, alternativement, l'énergie électrique pour recharger les moyens de stockage d'énergie et les donées transférées entre l'objet portatif et le dispositif de transfert extérieur.

D'autres caractéristiques et avantages de l'invention apparaîtront au cours de la description faite au regard des dessins annexés donnés uniquement à titre d'exemple et dans lesquels:

– la fig. 1 est une représentation simplifiée des circuits de l'objet portatif objet de l'invention;

– la fig. 2 est une représentation détaillée des circuits de commande de la fig. 1;

– la fig. 3 est une représentation du séquenceur de la fig. 2;

– la fig. 4 est un diagramme des temps représentant un transfert de données du dispositif de transfert dans les moyens de mémorisation de l'objet portatif;

– la fig. 5 est un diagramme des temps représentant un transfert de données des moyens de mémorisation vers le dispositif de transfert.

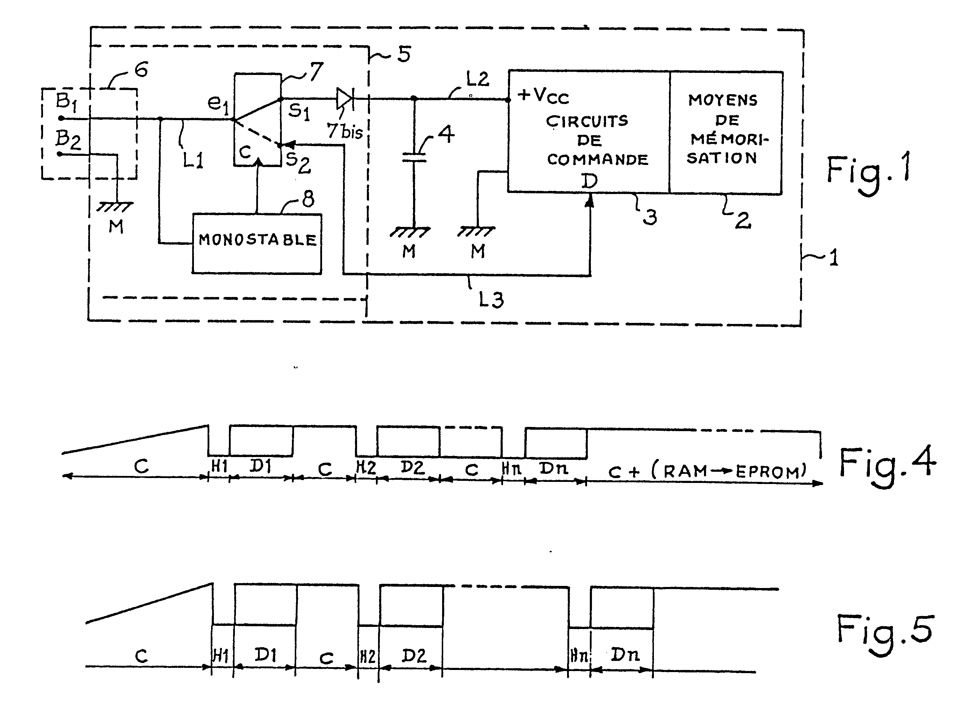

L'objet portatif 1 représenté à l'intérieur d'un rectangle en pointillés à la fig. 1 comprend des moyens de mémorisation 2, des circuits de commande 3, un moyen de stockage d'énergie électrique 4 constitué par un condensateur ou tout autre moyen équivalent, des moyens de commutation 5 ainsi qu'un moyen d'accouplement 6. Les moyens de commutation 5, représentés également à l'intérieur d'un rectangle en pointillés, sont constitués par un aiguilleur 7 et un basculeur monostable 8. Le moyen d'accouplement 6 est formé par une prise ou tout autre moyen équivalant qui permet une liaison bifilaire directe ou par un câble intermédiaire de l'objet portatif avec un dispositif de transfert extérieur non représenté. La prise constituant le moyen d'accouplement 6 possède deux bornes B1 et B2. La borne B1 est reliée directement à l'entrée de l'aiguilleur 7 par un fil L1 et la borne B2 est reliée à la masse M du circuit électronique de l'objet portatif.

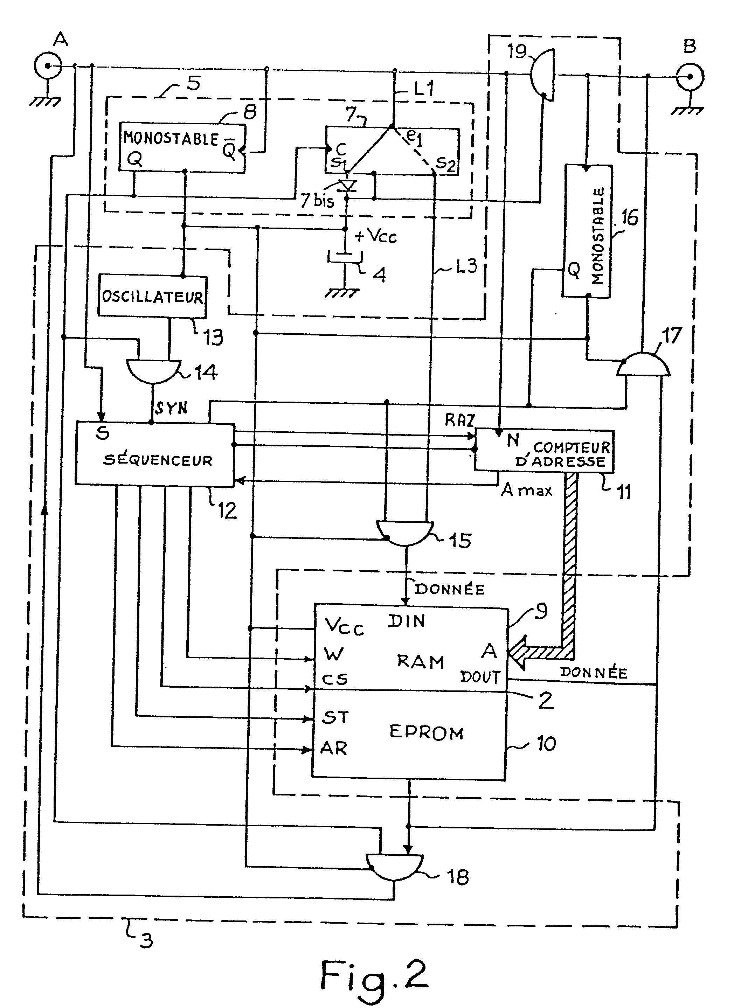

La borne B1 est également reliée à 'entrée du basculeur monostable 8 dont la sortie est reliée à l'entrée de commande c de l'aiguilleur 7. L'aiguilleur 7 a deux sorties S1 et S2. La sortie S1 est reliée par le fil conducteur L2 à la borne + Vcc d'alimentation des circuits de commande 3 et des moyens de mémorisation 2, par l'intermédiaire d'une diode 7 bis qui évite une décharge du condensateur 4 au travers de l'aiguilleur 7. La sortie S2 est reliée directement à la porte d'entrée-sortie D des données du circuit de commande 3 par l'intermédiaire du fil conducteur L3. La borne +Vcc d'alimentation des circuits de commande 3 est également reliée par le fil L2 à une extrémité du condensateur 4 dont l'autre extrémité est reliée à la masse M du dispositif. Lorsque la sortie du basculeur monostable 8 est placée dans un premier état, l'aiguilleur 7 établit une liaison entre la borne d'entrée B1 de l'objet portatif et la sortie S1 de l'aiguilleur 7 pour charger le condensateur 4, et stabiliser son niveau de potentiel sur celui appliqué, sur la borne B1, par le dispositif de transfert extérieur au dispositif. Lorsque la sortie du basculeur monostable 8 est dans un deuxième état, il commande l'aiguilleur 7 pour relier sa sortie S2 à la borne d'entrée B1 et relier la porte D d'entrée-sortie des circuits de commande 3 à la borne B1 par l'intermédiaire du fil L3. Pendant tout le temps où le basculeur monostable 8 est dans le deuxième état, les données sont transférées entre le dispositif de transfert et la porte d'entrée-sortie D des circuits de commande 3. Les circuits de commande 3 assurent la commande des moyens de mémorisation 2 pour permettre la lecture ou l'écriture des données transférées entre les moyens de mémorisation et le dispositif de transfert extérieur. Une variante de réalisation de l'objet portatif de la fig. 1 est maintenant décrite à l'aide du schéma de la fig. 2.

L'objet portatif représenté sur cette figure comprend deux prises de connexion A et B. La prise A permet de connecter l'objet portatif au dispositif extérieur de transfert pour transférer des données dans le dispositif extérieur, et la prise B permet de connecter l'objet portatif au dispositif extérieur de transfert pour transférer des données du dispositif extérieur à l'intérieur de l'objet portatif. Il comprend également, comme l'objet portatif représenté à la fig. 1, un condensateur 4 pour stocker l'énergie électrique d'alimentation reçue par l'une des prises A ou B quand l'objet portatif est relié à un dispositif de transfert extérieur ainsi que des moyens de commutation 5 formés par un aiguilleur 7, une diode 7 bis et un basculeur monostable 8.

Sur la fig. 2, les moyens de mémorisation 2 sont constitués par une première mémoire à lecture-écriture 9, du type RAM, qui est une abréviation du terme anglo-saxon «Random Access Memory» et par une mémoire non volatile 10, du type EPROM, qui est une abréviation du terme anglo-saxon «Erasable Programmable Read Only Memory». Dans ce mode particulier de réalisation de l'invention, la mémoire à lecture-écriture 9 est utilisée en tant que tampon entre la mémoire non volatile EPROM 10 et les circuits de commande 3 de l'objet portatif. Ces mémoires sont de type connu et on pourra éventuellement utiliser le circuit X220130 commercialisé par la Société MEM filiale de la Société de droit suisse Ebauches Electroniques. Les moyens de mémorisation 2 sont adressés et commandés par les circuits de commande 3 représentés à l'intérieur d'une ligne en pointillé qui comprennent un compteur d'adresse 11, un séquenceur 12 piloté par un oscillateur 13. Le compteur d'adresse 11 adresse par la ligne d'adresse AD les moyens de mémorisation 2. Le séquenceur 12 délivre des signaux de commande aux moyens de mémorisation 2. Ces signaux sont constitués par un signal de lecture-écriture W, un signal CS de sélection des moyens de mémorisation, un signal ST de commande de transfert du contenu de la mémoire lecture-écriture 9 dans la mémoire non volatile 10, et un signal AR de commande du transfert du contenu de la mémoire non volatile 10 dans la mémoire à lecture-écriture 9. Le séquenceur 12 est synchronisé à partir de l'oscillateur 13 dont les signaux de sortie sont contrôlés par la porte ET 14. La porte ET 14 délivre des signaux de synchronisation SYN au séquenceur 12. L'entrée des données à l'intérieur des moyens de mémorisation 2 est contrôlée par la porte ET 15 dont la sortie est reliée à l'entrée de données DIN des moyens de mémorisation 2. Une première entrée de la porte ET 15 est reliée à la sortie S2 de l'aiguilleur 7 par le fil L3, la deuxième entrée de la porte ET 15 est reliée à la sortie Q d'un basculeur monostable 16 dont la constante de temps est un peu plus grande que la durée d'un cycle de chargement de la mémoire de l'objet portatif par les données transmises par le dispositif extérieur connecté sur la prise B, et dont l'entrée est reliée à la prise B et est isolée de la prise A par une porte d'isolement 19. Le basculeur 16 permet en détectant l'activité des signaux transitant par la prise B de renseigner les circuits de commande 3 sur la façon dont l'objet portatif est relié au dispositif de transfert extérieur. Lorsque l'objet portatif est connecté par la prise A, aucune activité est détectée sur la prise B et le basculeur 16 reste au repos. Dans le cas contraire lorsque l'objet portatif est connecté par la prise B, le basculeur 16 change d'état dès qu'une activité se manifeste sur la prise B. La sortie DOUT des données des moyens de mémorisation 2 est reliée, d'une part, à une première entrée d'une porte ET 17 à deux entrées, et d'autre part, à une première entrée d'une porte ET 18 à deux entrées. La deuxième entrée de la porte ET 17 est reliée à la sortie Q du monostable 16 et sa sortie est reliée à la prise B. La deuxième entrée de la porte ET 18 est reliée à la sortie Q du monostable 8 et sa sortie est reliée à la prise A.

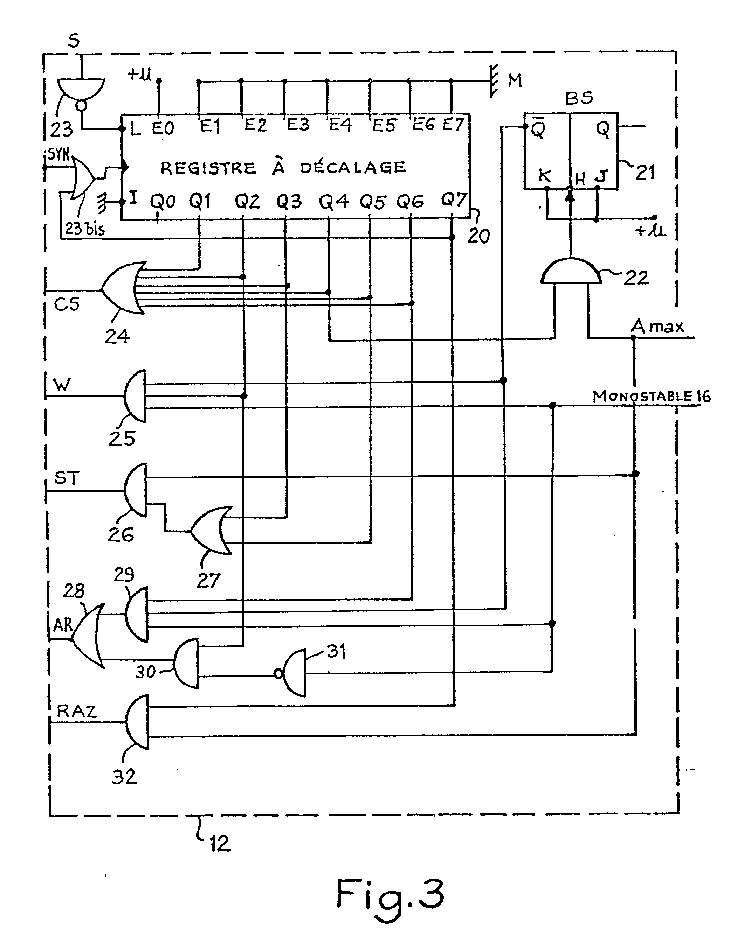

Des détails de réalisation du séquenceur 12 sont maintenant décrits à l'aide du schéma représenté à la fig. 3. Sur cette figure le séquenceur 12 est composé d'un registre à décalage 20, d'une bascule de sélection 21 et d'un ensemble de portes 22 à 32. Le registre à décalage 20 comprend huit basculeurs qui sont chargés initialement à une valeur binaire correspondant à la combinaison binaire appliquée sur leurs entrées parallèles E0 à E7. Le chargement du registre 20 à la valeur binaire initiale est commandé par un signal appliqué par la sortie de la porte 23 sur l'entrée L du registre 20. L'entrée de la porte 23 reçoit le signal S transmis par le dispositif de transfert sur les prises A ou B. Dans le mode de réalisation de la fig. 3, l'entrée E0 est polarisée par le niveau positif de la tension d'alimentation de l'objet portatif, et les entrées E1 à E7 sont reliées ensemble au point de masse M commun à l'ensemble des circuits de l'objet portatif. Le décalage, de l'information binaire contenue dans le registre à décalage, s'effectue au rythme du signal d'horloge SYN appliqué sur l'entrée d'horloge du registre à décalage 20 par la sortie de la porte ET 14 de la fig. 2 au travers d'une porte OU 23 bis. Les sorties parallèles du registre à décalage 20 sont notées Q0 à Q7. La sortie Q7, lorsqu'elle est à l'état haut, bloque à l'aide de la porte OU 23 bis l'horloge SN appliquée sur l'entrée d'horloge du registre à décalage 20 et arrête le décalage de l'information contenue dans ce registre. Le basculeur 21 est monté en diviseur binaire et son entrée d'horloge est reliée à la sortie d'une porte ET 22 dont une première entrée est reliée à la sortie de poids binaire maximum $A_{max}$ du compteur d'adresse 11 de la fig. 2. La deuxième entrée de la porte ET 22 est reliée à la sortie Q4 du registre à décalage 20. La porte OU 24 a six entrées, reliées respectivement aux sorties Q1 à Q6 du registre à décalage 20. La porte OU 24 délivre le signal de sélection CS des moyens de mémorisation 2 de la fig. 2. La porte ET 25 a trois entrées, une première entrée est reliée à la sortie Q̄ du basculeur de sélection BS 21, une deuxième entrée est reliée à la sortie Q2 du registre à décalage, et la troisième entrée est reliée à la sortie Q du basculeur monostable 16 de la fig. 2 pour indiquer la connexion de l'objet portatif par la prise B. La sortie de la porte ET 25 fournit le signal d'écriture-lecture W aux moyens de mémorisation 2. La porte ET 26 a une première entrée reliée à la sortie de poids maximum $A_{max}$ du compteur d'adresse 11 de la fig. 2 et une deuxième entrée reliée à la sortie d'une porte OU 27 également à deux entrées, dont une première entrée est reliée à la sortie Q3 du registre à décalage 20 et dont une deuxième entrée est reliée à sa sortie Q5. La porte ET 26 fournit le signal ST de transfert du contenu de la mémoire lecture-écriture 9 dans la mémoire non volatile 10. La porte OU 28 comprend deux entrées reliées respectivement aux sorties des portes ET 29 et ET 30. La porte ET 29 possède une première entrée reliée à la sortie Q6 du registre à décalage 20, une deuxième entrée sur laquelle est appliquée la sortie Q̄ du basculeur de sélection BS21 et une troisième entrée qui est reliée à la sortie Q du monostable 16 de la fig. 2. La porte ET 30 possède deux entrées reliées respectivement à la sortie Q2 du registre 20 et à la sortie d'une porte inverseuse 31, dont l'unique entrée est reliée à la sortie Q du basculeur monostable 16 de la fig. 2. La porte OU 28 délivre le signal AR aux moyens de mémorisation 2 pour transférer le contenu de la mémoire non volatile 10 à l'intérieur de la mémoire à lecture-écriture 9. La porte ET 32 a deux entrées, une première entrée est reliée à la sortie Q7 du registre à décalage 20 et la deuxième entrée est reliée à la sortie de poids maximum $A_{max}$ du compteur d'adresse 11 de la fig. 2. La porte ET 32 délivre le signal RAZ au compteur d'adresse 11 de la fig. 2 pour le remettre à zéro lorsqu'il a atteint sa capacité maximum.

Le fonctionnement de l'objet portatif représenté à l'aide des fig. 2 et 3 est maintenant expliqué.

Lorsque l'objet portatif est connecté par la prise B au dispositif de transfert extérieur, l'objet portatif se place automatiquement en mode récepteur de données. Comme le transfert des données et l'alimentation en énergie de l'objet portatif se font en utilisant la même prise, les instants de charge du condensateur 4 et les instants de transfert des données ont lieu alternativement, de la façon représentée à la fig. 4. Chaque opération de transfert débute par le chargement du condensateur 4 au travers de l'aiguilleur 7. Après l'opération de chargement du condensateur 4, le dispositif de transfert fournit un premier signal d'horloge H1 qui est reçu au travers de la porte 19 à l'entrée du basculeur monostable 8 dont la sortie Q vient valider la porte ET 14 pour autoriser la progression du séquenceur 12. Le signal H1 est également appliqué à l'entrée de commande de la progression du compteur d'adresse 11 pour augmenter son contenu d'une unité. Pendant la durée du signal H1, le registre à décalage 20 est commandé sur son entrée L pour être chargé par la combinaison binaire initiale 10000000 présente sur ses entrées E0 à E7. Puis le registre à décalage toujours validé par la porte ET 14 est placé en mode série et décale son contenu d'un pas vers la droite à chaque signal d'horloge SYN fourni par l'oscillateur 13. Les moyens de mémorisation 2 sont sélectionnés, par la sortie de la porte OU 24, pendant tout le temps où les sorties Q1 à Q6 du registre à décalage 1 sont placées dans l'état 1 logique et un cycle d'écriture, de la donnée D1 transmise, par le dispositif de transfert sur la prise B, à l'adresse indiquée par le contenu du registre 11, est déclenché par la sortie de la porte ET 25 pendant l'instant où la sortie Q2 du registre à décalage 20 est placée dans l'état 1. Le transfert de la donnée ne s'effectue qu'à la fin de l'écriture de toutes les données, signalé par le signal $A_{max}$ fourni par le compteur d'adresse 11 de la fig. 2.

La progression du registre à décalage 20 a naturellement lieu pendant tout le temps durant lequel le circuit monostable 8 est dans l'état 1 logique et valide la porte ET 14. Ce temps est choisi égal à au moins 7 fois la période de l'oscillateur 13 pour que l'état binaire 1 mémorisé par le premier basculeur du registre puisse se propager sur toute la longueur. Lorsque la sortie Q7 du registre à décalage passe à 1, l'horloge SYN est bloquée à l'entrée du registre à décalage. Une nouvelle transition, appliquée sur l'entrée S du séquenceur, chargera le registre 20 à la valeur 10 000 000 et autorisera de nouveau la progression du registre à décalage 20 au rythme du signal d'horloge SYN appliqué à l'entrée de la porte OU 23 bis et reconnectera la sortie S1 de l'aiguilleur 7 sur la ligne 11 pour recharger le condensateur 4. Le même processus qui vient d'être décrit se reproduit nécessairement pour les données suivantes D2 à Dn à chaque signal d'horloge H2 à Hn transmis par le dispositif de transfert. L'intervalle de temps séparant chaque signal d'horloge est choisi supérieur à la durée d'un cycle du registre à décalage 20 et suffisant pour recharger le condensateur 4.

Lorsque le compteur d'adresse 11 a totalisé les n signaux d'horloge transmis par le dispositif extérieur sur la prise B, le signal $A_{max}$ est appliqué par le compteur 11 d'une part à l'entrée de la porte ET 22 pour positionner le basculeur de sélection 21 dans l'état 1 et invalider la porte ET d'écriture 25 et pour d'autre part, commander la porte ET 32 et remettre à zéro par le signal RAZ le compteur d'adresse 11 en fin de cycle d'écriture de la nème donnée transmise par le dispositif de transfert extérieur, et pour permettre l'envoi de 2 impulsions ST vers le moyen de mémorisation par les portes 26 et 27.

Egalement, en fin de cycle d'écriture de la nème donnée, le contenu de la mémoire EPROM 10 est vidé dans la mémoire RAM 9 par la commande du signal AR appliqué par la sortie de la porte OU 28 à l'entrée correspondante des moyens de mémorisation 2.

Cette disposition permet d'initialiser le séquenceur 12 pour effectuer une lecture de vérification du contenu des moyens de mémorisation 2 précédemment chargés au cours de la séquence de la fig. 4 précédente.

L'opération de lecture de vérification du contenu des moyens de mémorisation 2 commence comme pour l'opération d'écriture, par l'émission par le dispositif de transfert extérieur d'un premier signal d'horloge H1, qui commande le basculeur monostable 8 pour autoriser la progression du séquenceur 12. Les moyens de mémorisation sont sélectionnés par le signal CS émis par la porte OU 24 et placé en mode lecture par la porte ET 25 qui n'émet pas de signal W. Le compteur d'adresse 11 est incrémenté, par le signal H1, d'une unité, pour lire la première donnée contenue dans les moyens de mémorisation 2 et placer la donnée D1 correspondante sur la prise B, par l'intermédiaire de la porte ET 17. Le même processus se reproduit à chaque signal d'horloge H2 à Hn successivement transmis par le dispositif de transfert. A la nème donnée Dn transmise le compteur 11 atteint sa capacité maximum et applique à nouveau un signal $A_{max}$ à l'entrée de la porte ET 22 de commande du basculeur 21 ce qui remet à zéro ce basculeur et termine l'opération de chargement et de vérification des moyens de mémorisation 2.

En mode émetteur de données, l'objet portatif est connecté par la prise A au dispositif de transfert extérieur et le transfert des données a lieu suivant le chronogramme représenté à la fig. 5. Comme précédemment, l'opération de transfert commence par le chargement du condensateur C au travers de l'aiguilleur 7, puis, le dispositif de transfert fournit un premier signal d'horloge H1 qui est transmis à l'entrée du monostable 8 dont la sortie Q valide la porte ET 14 pour autoriser la progression du séquenceur 12. Le signal d'horloge H1 charge le registre à décalage 20 avec la combinaison binaire 10000000 et incrémente d'une unité le contenu du compteur d'adresse 11. A la disparition du signal H1, le registre à décalage 20 décale son contenu d'un pas vers la droite, à chaque signal d'horloge SYN fourni par l'oscillateur 13. L'accès aux moyens de mémorisation 2 est alors validé par la porte OU 24 transmettant le signal CS durant tout le temps où les sorties Q1 à Q6 du registre à décalage sont placées dans l'état 1. Comme l'objet portatif est connecté au dispositif de transfert par la prise A, la porte ET 25 n'est pas validée par la sortie Q du circuit monostable 16 et le signal W se trouve dans l'état 0 logique, plaçant les moyens de mémorisation en mode de lecture.

A l'instant Q2 le signal AR est fourni par la porte ET 28 pour commander le transfert du contenu de la mémoire EPROM 10 dans la mémoire RAM 9. La donnée est ensuite lue à l'adresse indiquée par le compteur 11 dans la mémoire RAM 9 et appliquée par la sortie de la porte ET 18 sur la prise A pour être reçue par le dispositif de transfert. Le même processus qui vient d'être décrit, se reproduit à chaque signal d'horloge suivant, transmis par le dispositif de transfert jusqu'à l'apparition du nème signal d'horloge Hn qui provoque la remise à zéro du compteur d'adresse 11 par le signal RAZ fourni par la porte ET 32.

L'invention n'est pas limitée à l'objet portatif qui vient d'être décrit, il va de soi qu'elle s'applique également à d'autres variantes de réalisation, dans lesquelles notamment la nature, par exemple, des circuits de commande ou des moyens d'accouplement, peut varier en fonction des applications conférées à l'objet portatif. En particulier on concevra que l'invention pourra être utilement mise à profit à la réalisation d'objets portatifs microprogrammés dans lesquels les moyens de commande sont constitués par des microprocesseurs ou tous autres moyens équivalents.

## Revendications

1. Objet portatif électronique (1) pour le stockage d'informations, comprenant des moyens de mémorisation (2) pour mémoriser des données, des moyens d'accouplement (6) pour connecter l'objet portatif à un dispositif de transfert de données extérieur, des circuits de commande (3) interconnectés entre les moyens de mémorisation (2) et les moyens d'accouplement, ainsi que des moyens de stockage d'énergie (4) pour emmagasiner de l'énergie électrique fournie par le dispositif de transfert lorsque l'objet portatif est connecté au dispositif de transfert et pour alimenter en énergie électrique les moyens de mémorisation (2) et les circuits de commande (3) de l'objet portatif, caractérisé en ce que l'objet portatif comprend en outre des moyens de commutation (5) pour recharger les moyens de stockage d'énergie (4) chaque fois que l'objet portatif (1) est connecté au dispositif de transfert et après chaque transfert d'au moins une donnée entre les moyens de mémorisation (2) de l'objet portatif et le dispositif de transfert, et en ce que l'objet portatif est relié au dispositif de transfert extérieur par une seule liaison (B1, B2) bifilaire sur laquelle sont transmis, alternativement, l'énergie électrique pour recharger les moyens de stockage d'énergie et les données transférées entre l'objet portatif et le dispositif de transfert extérieur.

2. Objet portatif selon la revendication 1, caractérisé en ce que les moyens de stockage d'énergie (4) comprennent au moins un condensateur.

3. Objet portatif selon l'une quelconque des revendications 1 et 2, caractérisé en ce que les moyens de mémorisation (2) sont constitués par une première mémoire non volatile (10) pour conserver les informations mémorisées à l'intérieur des moyens de mémorisation en l'absence d'énergie d'alimentation dans les moyens de stockage d'énergie et par une deuxième mémoire (9) pour servir de mémoire tampon aux informations transférées entre la première mémoire (10) et le dispositif de transfert extérieur.

4. Objet portatif selon l'une quelconque des revendications 1 à 3, caractérisé en ce que les moyens de mémorisation sont adressés par un compteur d'adresse (11) incrémenté par des signaux d'horloge transmis par le dispositif de transfert extérieur.

5. Objet portatif selon la revendication 4, caractérisé en ce que chaque signal d'horloge transmis par le dispositif de transfert extérieur agit sur les moyens de commutation (5) pour déconnecter les moyens de stockage d'énergie (4) de la liaison bifilaire (B1, B2) reliant l'objet portatif au dispositif de transfert.

6. Objet portatif selon l'une quelconque des revendications 1 à 5, caractérisé en ce que les moyens de commutation comprennent un aiguilleur (7) et un basculeur monostable (8),

– l'aiguilleur (7) ayant, une entrée reliée aux moyens d'accouplement (6), une première sortie (S2) reliée aux moyens de mémorisation pour transférer les données entre l'objet portatif et le dispositif de transfert extérieur et une deuxième sortie (S1) reliée aux moyens de stockage d'énergie (4),

– le basculeur monostable (8) étant relié à l'entrée de commande de l'aiguilleur (7) et étant lui-même commandé à chaque signal d'horloge reçu par l'objet portatif.

7. Objet portatif selon l'une quelconque des revendications 1 à 6, caractérisé en ce que les circuits de commande (3) comprennent un séquenceur (12) dont le cycle de fonctionnement est autorisé par le basculeur monostable (8) des moyens de commutation (5).

8. Objet portatif selon l'une quelconque des revendications 1 à 7, caractérisé en ce que les moyens d'accouplement (6) comprennent deux prises (A, B) pouvant être couplées alternativement, à volonté, au dispositif de transfert extérieur, une première prise (A) étant couplée au dispositif extérieur lorsque l'objet portatif est émetteur de données et une deuxième prise (B) étant couplée au dispositif extérieur lorsque l'objet portatif est récepteur.

9. Objet portatif selon l'une quelconque des revendications 1 à 8, caractérisé en ce que les moyens de commande (3) sont constitués par un microprocesseur.

## Patentansprüche

1. Tragbarer elektronischer Gegenstand (1) zur Speicherung von Informationen, versehen mit Speichermitteln (2) zum Speichern von Daten, Ankopplungsmitteln (6) zum Anschliessen des tragbaren Gegenstandes an eine externe Datenüberführungsvorrichtung, Steuerschaltungen (3), welche zwischen den Speichermitteln (2) und den Ankopplungsmitteln eingefügt sind, und Energiespeichermitteln (4) zum Speichern der elektrischen Energie, welche von der Überführungsvorrichtung geliefert wird, wenn der tragbare Gegenstand an die Überführungsvorrichtung angeschlossen ist, und zur Versorgung der Speichermittel (2) sowie der Steuerschaltungen (3) des tragbaren Gegenstandes mit elektrischer Energie, dadurch gekennzeichnet, dass der tragbare Gegenstand ferner Umschaltmittel (5) zum Wiederaufladen der Energiespeichermittel (4) jedesmal dann, wenn der tragbare Gegenstand (1) an die Überführungsvorrichtung angeschlossen ist, und nach jeder Überführung wenigstens einer Datengrösse zwischen den Speichermitteln (2) des tragbaren Gegenstandes und der Überführungsvorrichtung enthält und dass der tragbare Gegenstand mit der externen Überführungsvorrichtung durch eine einzige zweiadrige Verbindung (B1, B2) verbunden ist, über welche abwechselnd die elektrische Energie zum Wiederaufladen der Energiespeichermittel und die zwischen dem tragbaren Gegenstand und der externen Überführungsvorrichtung überführten Daten übertragen werden.

2. Tragbarer Gegenstand nach Anspruch 1, dadurch gekennzeichnet, dass die Energiespeichermittel (4) wenigstens einen Kondensator enthalten.

3. Tragbarer Gegenstand nach Anspruch 1 oder 2, dadurch gekennzeichnet, dass die Speichermittel (2) durch einen ersten nichtflüchtigen Speicher (10) gebildet sind, um die im Inneren der Speichermittel gespeicherten Informationen bei fehlender Energieversorgung in den Energiespeichermitteln aufzubewahren, und durch einen zweiten Speicher (9), welcher als Pufferspeicher für die Informationen dient, welche zwischen dem ersten Speicher (10) und der externen Überführungsvorrichtung übertragen werden.

4. Tragbarer Gegenstand nach einem der Ansprüche 1 bis 3, dadurch gekennzeichnet, dass die Speichermittel durch einen Adresszähler (11) adressiert werden, welcher durch Taktsignale inkrementiert wird, die durch die externe Überführungsvorrichtung übertragen werden.

5. Tragbarer Gegenstand nach Anspruch 4, dadurch gekennzeichnet, dass jedes Taktsignal, welches durch die externe Überführungsvorrichtung übertragen wird, auf die Umschaltmittel (5) einwirkt, um die Energiespeichermittel (4) von der zweiadrigen Verbindung (B1, B2) abzutrennen und den tragbaren Gegenstand an die Überführungsvorrichtung anzuschliessen.

6. Tragbarer Gegenstand nach einem der Ansprüche 1 bis 5, dadurch gekennzeichnet, dass die Umschaltmittel einen Umschalter (7) und eine monostabile Kippschaltung (8) umfassen,
– wobei der Umschalter (7) einen mit den Ankopplungsmitteln (6) verbundenen Eingang, einen ersten Ausgang (S2), welcher mit den Speichermitteln verbunden ist, um die Daten zwischen dem tragbaren Gegenstand und der externen Überführungsvorrichtung zu übertragen, und einen zweiten Ausgang (S1) aufweist, der mit den Energiespeichermitteln (4) verbunden ist,
– wobei die monostabile Kippschaltung (8) mit dem Steuereingang des Umschalters (7) verbunden ist und ihrerseits durch jedes Taktsignal gesteuert wird, welches der tragbare Gegenstand empfängt.

7. Tragbarer Gegenstand nach einem der Ansprüche 1 bis 6, dadurch gekennzeichnet, dass die Steuerschaltungen (3) eine Folgesteuerung (12) umfassen, deren Betriebszyklus durch die monostabile Kippschaltung (8) der Umschaltmittel (5) freigegeben wird.

8. Tragbarer Gegenstand nach einem der Ansprüche 1 bis 7, dadurch gekennzeichnet, dass die Ankopplungsmittel (6) zwei Abgriffe (A, B) umfassen, die abwechselnd beliebig an die externe Überführungsvorrichtung angekoppelt werden können, wobei der erste Abgriff (A) an die externe Vorrichtung angekoppelt ist, wenn der tragbare Gegenstand Daten aussendet, und der zweite Abgriff (B) an die externe Vorrichtung angekoppelt ist, wenn der tragbare Gegenstand empfängt.

9. Tragbarer Gegenstand nach einem der Ansprüche 1 bis 8, dadurch gekennzeichnet, dass die Steuermittel (3) durch einen Mikroprozessor gebildet sind.

## Claims

1. Portable electronic object (1) for storing information, comprising memorizing means (2) for memorizing data, coupling means (6) to connect the portable object to an external data transfer device, control circuits (3) interconnected between the memorizing means (2) and the coupling means as well as energy storing means (4) to store electric energy supplied by the transfer device when the portable object is connected to the transfer device and to supply electric energy to the memorizing means (2) and to the control circuits (3) of the portable object, characterized in that the portable object further comprises switching means (5) for reloading the energy storage means (4) each time the portable object (1) is connected to the transfer device and after each transfer of at least one data between the memorizing means (2) of the portable object and the transfer device, and in that the portable object is connected to the external transfer device through a single bifilar connection (B1, B2) whereon the electric energy for reloading the energy storage means and the data transferred between the portable object and the external transfer device are alternatingly transmitted.

2. Portable object according to claim 1, characterized in that the energy storage means (4) comprise at least one capacitor.

3. Portable object according to any of claims 1 and 2, characterized in that the memorizing means are formed by a first non-volatile memory (10) for saving the information stored within the memorizing means in the absence of an energy supply from the energy storage means and by a second memory (9) used as a buffer memory for the information transferred between the first memory (10) and the external transfer device.

4. Portable object according to any of claims 1 to 3, characterized in that the memorizing means are addressed by an address counter (11) incremented by clock signals transmitted by the external transfer device.

5. Portable object according to claim 4, characterized in that each clock signal transmitted by the external transfer device acts upon the switching means (5) to disconnect the energy storing means (4) from the bifilar connection (B1, B2) and connecting the portable object to the transfer device.

6. Portable object according to any of claims 1 to 5, characterized in that the switching means comprise a change-over switch (7) and a monostable circuit (8),
– the change-over switch (7) having an input connected to the coupling means (6), a first output (S2) connected to the memorizing means to transfer the data between the portable object and the external transfer device and a second output (S1) connected to the energy storing means (4),
– the monostable circuit (8) being connected to the control input of the change-over switch (7) and being itself controlled by each clock signal received by the portable object.

7. Portable object according to any of claims 1 to 6, characterized in that the control circuit (3) comprise a sequencer (12) the operating cycle of which is enabled by the monostable circuit (8) of the switching means (5).

8. Portable object according to any of claims 1 to 7, characterized in that the coupling means (6) comprise two terminals (A, B) susceptible to be alternatingly coupled, at will, to the external transfer device, a first terminal (A) being coupled to the external device when the portable object transmits data and a second terminal (B) being coupled to the external device when the portable object receives.

9. Portable object according to any of claims 1 to 8, characterized in that the control means (3) are formed by a microprocessor.

Fig.1

C | H1 | D1 | C | H2 | D2 | C | Hn | Dn | C + (RAM → EPROM)

Fig.4

C | H1 | D1 | C | H2 | D2 | | Hn | Dn

Fig.5

Fig.2

Fig.3